# EUROPÄISCHE PATENTSCHRIFT

(11) **EP 0 950 684 B1**
(45) Veröffentlichungstag und Bekanntmachung des Hinweises auf die Patenterteilung: **07.04.2004**
(21) Anmeldenummer: 99107111.9
(22) Anmeldetag: 12.04.1999
(51) Int. Cl.: C08J 11/06

(54) **Verfahren zur Wiederaufbereitung von siliconharzhaltigem Polyamidmaterial**
Process for recycling a polyamide material which contains silicon resin
Procédé pour le recyclage d'un matériau de polyamide contenant une résine de silicone

(30) Priorität: 17.04.1998 DE 19817160
(43) Veröffentlichungstag der Anmeldung: 20.10.1999
(73) Patentinhaber: F.A. Rueb Holding GmbH, 79677 Schönau (DE)
(72) Erfinder: Baqué, Thomas Dr., 79677 Schönau (DE)
(74) Vertreter: Grünecker, Kinkeldey, Stockmair & Schwanhäusser Anwaltssozietät

(56) Entgegenhaltungen:
- EP-A- 0 589 642
- US-A- 5 208 097
- PATENT ABSTRACTS OF JAPAN vol. 011, no. 379 (C-463), 10. Dezember 1987 (1987-12-10) & JP 62 149380 A (TORAY IND INC), 3. Juli 1987 (1987-07-03)
- PATENT ABSTRACTS OF JAPAN vol. 001, no. 064 (C-017), 22. Juni 1977 (1977-06-22) & JP 52 026555 A (ASAHI CHEM IND CO LTD), 28. Februar 1977 (1977-02-28)

## Beschreibung

Die vorliegende Erfindung betrifft ein Verfahren zur Wiederaufbereitung von siliconharzhaltigem Polyamidmaterial.

Polyamide sind Polymere, die in der Hauptkette die Gruppierung -CO-NHenthalten können. Sie können aus zwei verschiedenen bifunktionellen Monomerbausteinen, von denen jeder zwei gleiche reaktive Gruppen enthält, oder aus einheitlich bifunktionellen Bausteinen, die je eine Amino- und Carboxylgruppe tragen oder ausbilden können, erhalten werden. Die Hauptvertreter sind Polyamid 6,6 und Polyamid 6. Der weitaus überwiegende Teil der Polyamide wird zu Fasern versponnen und in Form von Geweben in vielen Bereichen der Technik eingesetzt. Die Hauptbereiche sind dabei der Bekleidungssektor, Teppiche und Bodenbeläge sowie technische Anwendungen, wie Reifen und Taue. Auch in der Automobilindustrie werden Polyamidgewebe weit verbreitet eingesetzt. So werden beispielsweise unbeschichtete Polyamidgewebe für Frontairbags eingesetzt. Der bei der Herstellung sowie bei der Demontage von gebrauchten und/oder alten Airbags anfallende Polyamidabfall kann einfach durch übliche Verfahren einer Wiederverwertung zugeführt werden.

Seiten- und Deckenairbags werden nicht wie Frontairbags aus unbeschichteten Polyamidgeweben gefertigt. Da diese Airbags höheren Ansprüchen genügen müssen, insbesondere im Hinblick auf langes Halten der Luft im gefüllten Zustand, werden die dafür verwendeten Polyamidmaterialien mit Siliconharzen beschichtet. Häufig werden diese Gewebe zusätzlich noch eingefärbt.

Bei der Herstellung von Seiten- und Deckenairbags fallen jährlich mehrere tausend Tonnen Gewebeabfälle an. Da siliconharzbeschichtete Polyamidgewebe nicht wie die unbeschichteten Gewebe, wiederaufgearbeitet werden können, ist es derzeit möglich, diese Gewebeabfälle als Müll zu entsorgen. Im Hinblick auf ressourcenschonendes Wirtschaften, insbesondere vor dem Hintergrund, daß die Mengen an siliconharzbeschichteten Polyamidgewebeabfällen in den nächsten Jahren eher noch ansteigen werden (mehr und mehr Autos werden mit Seiten- und Deckenairbags ausgerüstet, damit fallen auch mehr alte und gebrauchte Airbags an), ist es wünschenswert, auch siliconharzbeschichtete Polyamidgewebe wiederverwerten zu können.

Es ist daher die Aufgabe der vorliegenden Erfindung, ein Verfahren zur Wiederaufbereitung von siliconharzhaltigem Polyamidmaterial anzugeben, das die Wiederverwertung des Polyamids ermöglicht.

Diese Aufgabe wird durch ein Verfahren zur Wiederaufbereitung von siliconharzhaltigem Polyamidmaterial gelöst, umfassend die Schritte:
a) Behandeln des Polyamidmaterials mit Alkalihydroxid-Lösung unter Erwärmung,
b) Abtrennen des in Schritt a) erhaltenen festen Materials von der Lösung, und
c) Behandeln des abgetrennten Materials mit phosphoriger Säure.

Überraschenderweise wurde gefunden, daß es das erfindungsgemäße Verfahren ermöglicht, das Polyamid aus siliconharzhaltigen Polyamidmaterialien einer Wiederverwertung zuzuführen, ohne die Qualität des Polyamides zu beeinträchtigen.

Im Anschluß an die Behandlung mit phosphoriger Säure kann das Material abgetrennt, und mit konventionellen Mitteln, beispielsweise einem Heißluftgebläse, getrocknet werden. Das Material kann auch im Anschluß an die Behandlung mit phosphoriger Säure und gegebenenfalls anschließender Trocknung granuliert werden. Die Granulierung erfolgt üblicherweise in konventionellen Extrudern. Diese Verfahrensschritte können auch mit anderen, für diesen Zweck üblichen Vorrichtungen durchgeführt werden.

Das erfindungsgemäße Verfahren umfaßt vorzugsweise eine Zerkleinerungs- und/oder Vorreinigungsstufe vor der Behandlung mit der Alkalihydroxid-Lösung. Im Zerkleinerungsschritt wird das siliconharzhaltige Polyamidmaterial durch geeignete Methoden, beispielsweise Mahlen oder Schreddern, in kleine Stücke zerteilt. Diese kleinen Stücke haben bevorzugt eine Kantenlänge im Bereich von 1 bis 10 mm, insbesondere von 3 bis 6 mm. Die so erhältlichen Polyamidmaterial-Stücke können in Wasser suspendiert werden. Anschließend kann mittels Metallabscheidern eine Trennung von Metallverunreinigungen erfolgen. Weiterhin kann durch Sieb-Schwebetrennung eine Abtrennung von weiteren Verunreinigungen, wie Holz oder Papier, erreicht werden. Die dazu nötigen Vorrichtungen und Verfahrensweisen sind dem Fachmann geläufig.

Die Behandlung mit Alkalihydroxid, gegebenenfalls nach einer Zerkleinerungs- und/oder Vorreinigungsstufe, erfolgt üblicherweise durch Zugabe von Alkalihydroxid zu einer wäßrigen Suspension des siliconharzhaltigen Polyamidmaterials. Das Alkalihydroxid wird in einer solchen Menge zugegeben, daß die dabei entstehende Lauge 5 bis 50 Gew.-%, bevorzugt 10 bis 30 Gew.-% Alkalihydroxid enthält. Alternativ kann das siliconharzhaltige Polyamidmaterial auch mit einer Alkalihydroxidlösung gemischt werden. Die Alkalihydroxid-Lösung hat dabei eine Konzentration wie oben angegeben. Als Alkalihydroxide werden vorzugsweise Natrium- und Kaliumhydroxid eingesetzt.

Die Behandlung mit Alkalihydroxid-Lösung erfolgt unter Erwärmung, bevorzugt auf eine Temperatur im Bereich des Siedepunkts des Gemisches. Dabei ist es vorteilhaft, die Suspension durch geeignete Maßnahmen intensiv zu mischen bzw. zu rühren. Die dazu nötigen Vorrichtungen sind dem Fachmann geläufig.

Weiterhin können in Schritt a) des erfindungsgemäßen Verfahrens vorteilhafterweise Tenside zugegeben werden. Dabei können alle üblichen Tenside eingesetzt werden. Die Menge an Tensid ist nicht beschränkt, sollte aber so gewählt sein, daß die Viskosität der Lauge nicht zu groß wird. Die Behandlung mit Alkalihydroxid unter Erwärmung sollte für eine ausreichende Zeitspanne durchgeführt werden, um eine möglichst vollständige Abtrennung des Siliconharzes und anderer Bestandteile vom Polyamidmaterial zu erreichen. Üblicherweise liegt die Behandlungszeit, bei Erwärmung zum Sieden und intensivem Mischen, im Bereich von 10 Minuten bis 2 Stunden. Nach der Behandlung mit Alkalihydroxid-Lösung wird das dabei erhaltene feste Material von der Lauge abgetrennt. Dieses kann durch übliche Verfahren, beispielsweise durch Filtration, erfolgen. Die Abtrennung kann bei Reaktionstemperatur oder nach Abkühlung der Lauge erfolgen. Anschließend kann das abgetrennte Material mit Wasser gespült werden. Zum Spülen können wiederum Tenside, aber auch Alkohole, wie Methanol, Ethanol oder Propanol sowie Mischungen davon, zugegeben werden. Die Menge an Tensid oder Alkohol liegt dabei vorzugsweise im Bereich von 0,1 bis 5%, insbesondere bevorzugt im Bereich von 0,5 bis 3%.

Im Anschluß an das Abtrennen von der Lauge, gegebenenfalls nach dem Spülen, wird das Material mit phosphoriger Säure behandelt. Phosphorige Säure, H₃PO₃, wird bevorzugt in einer Konzentration im Bereich von 1 bis 10%, insbesondere bevorzugt 3 bis 6%, verwendet. Bei dieser Behandlung wird das im abgetrennten festen Material verbliebene Alkalihydroxid in ein Alkalihydrogenphosphinat umgewandelt. Dieser Behandlungsschritt wird üblicherweise bei Raumtemperatur durchgeführt; es ist aber auch möglich im Bereich von bis zu 50°C zu arbeiten.

Der durch das erfindungsgemäße Verfahren erhältliche Polyamidwertstoff entspricht in seinen Eigenschaften den in der Polyamidcompoundierung verwendeten Rohpolyamiden und kann somit als Ersatz für diese verwendet werden. Das erfindungsgemäße Verfahren ermöglicht in vorteilhafter Weise die Nutzbarmachung des in siliconharzhaltigen Polyamidmaterialien enthaltenen Wertstoffes Polyamid.

Das erfindungsgemäße Verfahren kann sowohl kontinuierlich als auch diskontinuierlich durchgeführt werden. Die dafür nötigen Vorrichtungen so wie Verfahrensmaßnahmen sind dem Fachmann bekannt.

Mit dem erfindungsgemäßen Verfahren können alle siliconharzhaltigen Polyamidmaterialien wiederaufbereitet werden, so daß der enthaltene Wertstoff Polyamid einer Wiederverwertung zugänglich wird. Insbesondere eignet sich das erfindungsgemäße Verfahren zur Behandlung von mit Siliconharz beschichteten Polyamidgeweben, wie sie beispielsweise zur Airbag-Herstellung verwendet werden.

Das folgende Beispiel erläutert die Erfindung.

4 kg Airbagabfälle wurden in einer Schneidmühle gemahlen. Die gemahlenen Airbagabfälle wurden nach einer Reinigung in einem Metallabscheider in einen 20 l Glasreaktor, welcher mit Heizmantel, Innenrührer und einem Turborührer versehen war, gegeben. Mit heißer, 25%iger Natronlauge wurde auf 10 I aufgefüllt. Das Gemisch wurde unter intensivem Rühren und Dispergieren mittels des Turborührers auf Siedehitze gebracht und 30 Minuten lang bei dieser Temperatur gehalten. Anschließend wurde die Lauge abgelassen und mit handelsüblichem Waschmittel versetztem Wasser gewaschen. Das Waschwasser enthielt zusätzlich ca. 1 % Ethanol. Die Waschdauer betrug 10 Minuten. Die Waschlösung wurde abgelassen und anschließend mit einer 5%igen phosphorigen Säure für ca. 2 Minuten neutralisiert. Nach einem weiteren Waschschritt wurde die Suspension in eine Zentrifuge gegeben und dort zentrifugiert. Die erhaltenen Polyamidschnitzel wurden im Trockenschrank getrocknet und anschließend extrudiert. Das dabei erhaltene Produkt entsprach in den maßgeblichen Qualitätskriterien neu hergestelltem Polyamid.

## Patentansprüche

1. Verfahren zur Wiederaufbereitung von siliconharzhaltigem Polyamidmaterial, umfassend die Schritte:
a) Behandeln des Polyamidmaterials mit Alkalihydroxid-Lösung unter Erwärmung,
b) Abtrennen des in Schritt a) erhaltenen festen Materials von der Lösung, und
c) Behandeln des abgetrennten Materials mit phosphoriger Säure.

2. Verfahren nach Anspruch 1, bei dem in Behandlungsschritt a) Tenside zugegeben werden.

3. Verfahren nach mindestens einem der vorstehenden Ansprüche, bei dem in Behandlungsschritt a) bis zur Siedehitze erwärmt wird.

4. Verfahren nach mindestens einem der vorstehenden Ansprüche, bei dem nach Behandlungsschritt c) das Material getrocknet wird.

5. Verfahren nach mindestens einem der vorstehenden Ansprüche, bei dem nach Behandlungsschritt c) granuliert wird.

6. Verfahren nach mindestens einem der vorstehenden Ansprüche, bei dem zwischen den Schritten b) und c) das Material gespült wird.

## Claims

1. Process for recycling silicon resin containing polyamide material, comprising the following steps:
a) Treatment of polyamide material with alkalihydroxide solution under heat;
b) Separation of solid material obtained in step a) from the solution; and
c) Treatment of separated material with phosphoric acid.

2. Process according to Claim 1 with tenside added in treatment step a).

3. Process according to at least one of the above claims with heating up to boiling point in treatment step a).

4. Process according to at least one of the above claims, in which the material is dried after treatment step c).

5. Process according to at least one of the above claims, in which granulation is carried out after treatment step c).

6. Process according to at least one of the above claims, in which the material is flushed between steps b) and c).

## Revendications

1. Procédé de recyclage de matériau de polyamide contenant une résine silicone comprenant les étapes consistant à :
a) traiter le matériau de polyamide avec une solution d'hydroxyde de métal alcalin en chauffant,
b) séparer le matériau solide obtenu dans l'étape a) de la solution, et
c) traiter le matériau séparé avec de l'acide phosphorique.

2. Procédé selon la revendication 1, dans lequel on ajoute des tensio-actifs dans l'étape de traitement a).

3. Procédé selon au moins l'une des revendications précédentes, dans lequel on chauffe, dans l'étape de traitement a), jusqu'à l'ébullition.

4. Procédé selon au moins l'une des revendications précédentes, dans lequel on sèche le matériau après l'étape de traitement c).

5. Procédé selon au moins l'une des revendications précédentes, dans lequel on transforme le matériau en granulés après l'étape de traitement c).

6. Procédé selon au moins l'une des revendications précédentes, dans lequel on rince le matériau entre les étapes b) et c).
